# DEMANDE DE BREVET EUROPEEN

(11) **EP 4 471 729 A1**
(43) Date de publication de la demande: **04.12.2024**
(21) Numéro de dépôt: 24178927.0
(22) Date de dépôt: 29.05.2024
(51) Int. Cl.: G06V 10/62, G06V 20/56

(54) **SYSTÈME ET PROCÉDÉ POUR AFFICHER UNE VUE D'UNE ZONE DE SOL COUVERTE PAR UN VÉHICULE**

(30) Priorité: 30.05.2023 FR 2305365
(71) Demandeur: Ampere SAS, 92100 Boulogne-Billancourt (FR)
(72) Inventeur: La désignation de l'inventeur n'a pas encore été déposée
(74) Mandataire: Renault Group

(57) **Abrégé**

Procédé et système d'aide à la conduite de véhicule automobile, configuré pour fournir un affichage d'une restitution d'une scène de proximité (SP), ladite scène de proximité comprenant au moins une portion de sol couverte (PSC) par le dit véhicule automobile, notamment sa partie avant, la restitution étant élaborée à partir d'images antérieures captées par au moins une caméra embarquée, couvrant la scène de proximité, la restitution comprenant une incrustation d'une représentation des roues avant du véhicule.

## Description

L'invention se rapporte à un procédé et à un système pour afficher une vue d'une zone de sol couverte par un véhicule automobile. Un tel affichage d'une zone de sol couverte par un véhicule fait partie des systèmes d'aide à la conduite fournissant une assistance à un conducteur notamment pour effectuer des manoeuvres, en particulier à basse vitesse.

D'une manière générale, lorsqu'un conducteur de véhicule effectue des manoeuvres, par exemple pour garer le véhicule, il n'a pas une vision totale de l'environnement du véhicule. En effet, certains éléments du véhicule empêchent une vue directe, par exemple le capot du véhicule empêche de voir les éléments qui sont juste devant le véhicule, mais plus généralement tout le pourtour immédiat du véhicule ne bénéficie pas d'une vue directe par le conducteur.

Si on considère un fourgon, un véhicule utilitaire et encore plus un camion, la zone de non-visibilité directe est encore plus importante.

La vue directe ou les vues procurées par les systèmes de rétrovision ne permettent pas de voir tout le pourtour immédiat du véhicule.

À fortiori, les éléments qui se trouvent sous le véhicule ne peuvent pas être vus directement par le conducteur.

Il existe des systèmes de détection d'obstacles, à base d'utilisation de signaux ultrasonores ou de signaux radar, mais ce genre de système ne renseigne pas sur la nature des obstacles, et ils sont sujets à certaines fausses détections ou certaines non-détections.

Dans un environnement urbain, où le conducteur essaie de se garer, la place de parking peut être équipée de plots, ou il peut y avoir une bordure de hauteur supérieure à 12 ou15 cm à prendre en compte ou un nid-de-poule à éviter, ou tout autre écueil à gérer.

Dans un environnement tout chemin ou piste, il peut y avoir des pierres ou des nids-de-poule à éviter.

Certains ont essayé d'enrichir les vues dites à vol d'oiseau (de la terminologie anglaise « Bird View » ou « Bird Eye View »), mais les informations fournies au conducteur restent générales et n'ont pas un niveau de détail suffisant.

Les inventeurs ont cherché à améliorer la situation. Il y a en effet un intérêt à compléter la vision directe que le conducteur peut avoir en direct, par des informations qui le renseigne sur la position des objets ou écueils à éviter à proximité immédiate du véhicule (ou même dessous) pour lesquelles le conducteur ne bénéficie pas de vision directe lorsqu'il manoeuvre le véhicule.

A cet effet, il est proposé ici un procédé d'aide à la conduite de véhicule automobile (VH), configuré pour fournir un affichage d'une restitution d'une scène de proximité (SP), ladite scène de proximité comprenant au moins une portion de sol couverte (PSC) par le dit véhicule automobile, notamment sa partie avant, le procédé comprenant :
a- acquérir des images via au moins une caméra embarquée (40,41,42,43,44), de préférence quatre caméras embarquées,
b- enregistrer en mémoire des images, captées à une pluralités d'horodates (t1, t2,... tn) et/ou de positions du véhicule, relatives au moins à une zone avant du véhicule (ZA), et/ou des méta-images (e.g. 360° ou Bird view), construites à partir des images captées à une pluralités d'horodates (t1, t2,... tn) et/ou de positions du véhicule,
c- relever par odométrie les déplacements du véhicule,
d- déterminer une position courante du véhicule, et le périmètre de la portion de sol couverte courante (PSC2), dans un repère local,
e- déterminer dans la mémoire d'images ou de méta-images au moins un item qui couvre le périmètre de la portion de sol couverte courante (PSC2), et en déterminer la ou les images ou méta-image source à utiliser,
f- afficher, sur un écran, une restitution de l'image source à afficher en y superposant une représentation des roues avant du véhicule.

Grâce aux dispositions présentées ci-dessus, on fournit au conducteur des informations visuelles concernant le dessous du véhicule sans faire appel à une caméra dirigée vers le sol ou implantée sous le châssis du véhicule. Le conducteur peut ainsi manoeuvrer comme s'il avait une vision de la zone sous capot moteur. Le conducteur a l'impression de « voir au travers » du capot et du moteur.

Il faut remarquer que pour arriver à la restitution graphique, il peut être prévu de pratiquer une ou plusieurs corrections éventuelles, comme pivotement vertical, redressement, suppression de distorsion grand angle, et cetera.

Dans le présent document, on désigne par « méta-image » un assemblage cohérent de données construit à partir d'images capturées par des caméras. Par exemple, on qualifie ici de méta-image : une vue panoramique, une restitution graphique à 360° ou encore une vue construite en considérant un point de vue virtuel en hauteur comme par exemple la « Bird View », sans que ces exemples soient limitatifs.

Dans le présent document, il faut comprendre que le terme « *position du véhicule* » englobe à la fois la position géographique d'un point de référence du véhicule et le cap courant du véhicule c'est-à-dire l'orientation, par exemple l'orientation par rapport au nord. La position géographique est référencée par rapport à un repère spatial, que l'on peut considérer comme local ici. On considère que le véhicule se déplace sur le sol en 2 dimensions donc la position géographique peut-être considérée comme une position cartographique locale avec deux coordonnées.

Concernant la locution *« la pluralité d'horodates et*/*ou de positions du véhicule* », on comprend que le repère de marquage des images peut être temporel ou spatial. Selon une logique purement temporelle, on horodate les images, et le cas échéant les méta-images, quelle que soit la vitesse d'avancement du véhicule, même si celui-ci est immobile. Selon une logique essentiellement spatiale, les images sont repérées par la position géographique/cartographique du point de vue qui les a capturés ou dans le cas présent la position du véhicule (cap inclus) à l'instant de la capture. La logique temporelle est plus simple mais peut conduire à stocker de grandes quantités de données inutilement lorsque le véhicule ne bouge pas. Selon cette logique, on peut n'enregistrer des images que pour des positions de véhicules différentes. La logique spatiale est plus pertinente de ce point de vue, mais un peu plus complexe à mettre en oeuvre car il faut suivre et gérer les positions successives du véhicule.

A l'étape e-, on remarque que le processus s'apparente à un retour en arrière à des configurations antérieures où/quand au moins une caméra avait en vision directe la portion de sol maintenant couverte. C'est donc la mise en mémoire puis la récupération postérieure d'une image pertinente qui permet la restitution de l'image correspondant à la portion de sol couverte maintenant par le véhicule.

Il faut aussi noter que le procédé proposé fonctionne de jour comme de nuit, car de nuit on bénéficie astucieusement de l'éclairage frontal du véhicule par ses projecteurs avant, ainsi l'éclairage de la scène frontale convient à l'utilisation des images de la scène qui en est faite ultérieurement.

Selon un aspect, la restitution de la scène de proximité est réalisée avec un point de vue correspondant substantiellement à un point de vue d'un conducteur (C) en position de conduite du véhicule.

Moyennant quoi on présente au conducteur une vue qui ressemble à ce qu'il verrait si le capot et les éléments du véhicule interposés entre les roues avant étaient transparents.

Selon une réalisation particulière, il est prévu au moins quatre caméras, et on passe par une construction de méta-image de type 360° ou Bird view, i.e. 'vue à col d'oiseau'.

On utilise ainsi une fonction déjà existante pour en extraire des images pertinentes ou une partie pertinente. La fonction existante 360° est appelée dans le jargon du métier AVM (« Around View Monitor »).

Selon un aspect, la scène de proximité (SP) comprend la portion de sol couverte (PSC) et son pourtour sous forme d'une bande périphérique (BP). Ainsi, on affiche non seulement la portion de sol couverte directement par l'ombre portée verticale du véhicule, mais aussi les abords immédiats de celle-ci, à gauche, à droite et devant, tel que par exemple les bordures tel que trottoir, limites de place, arbustes ou végétation.

Selon un aspect, la restitution d'une scène de proximité comprend en outre un affichage ajouté de la possible trajectoire de chaque roue avant en cas de mouvement avant ou arrière du véhicule, en fonction d'une information angle volant instantanée.

Moyennant quoi, la restitution graphique fournit au conducteur une indication visuelle de la trajectoire des roues. De plus, cette restitution est réalisée en temps réel, de sorte que le conducteur peut visualiser ce qu'il va se passer notamment s'il avance par rapport aux obstacles éventuels que les roues vont rencontrer. La trajectoire représentée est recalculée en temps réel avec l'angle volant instantané, par conséquent la restitution graphique est dynamique en fonction des mouvements faits par le conducteur sur le volant même si le véhicule n'avance pas.

Selon une réalisation, la représentation des roues avant du véhicule comprend une emprise/empreinte au sol et/ou un avatar en 3 dimensions. Ceci fournit un élément de compréhension rendant la restitution graphique intuitive pour le conducteur.

Par « avatar », il faut comprendre ici une représentation symbolique. Selon une réalisation, l'avatar de roue est partiellement translucide, i.e. partiellement transparent, de sorte que le rendu visuel permet de voir au travers de la roue également.

Selon un aspect, la restitution d'une scène de proximité comprend en outre un affichage ajouté d'un gabarit et/ou de l'ombre portée du véhicule en projection verticale. Grâce à quoi, le conducteur visualise la limite avant du véhicule, cette limite correspondant à la dimension hors-tout du véhicule. Le conducteur peut ainsi savoir si le véhicule va contacter un obstacle situé à proximité immédiate. De manière similaire, le conducteur visualise aussi la limite à gauche et la limite à droite du véhicule.

Selon un aspect, en cas d'utilisation d'une caméra unique frontale, la zone avant du véhicule (ZA) s'étend axialement (longitudinalement), depuis le bord avant du véhicule, entre une distance frontale minimum et une distance frontale maximum, et s'étend latéralement selon un cône ouvert présentant un demi angle sommet noté α2, α2 étant au moins égal à 60°.

La zone de capture des images très large, au moins 120°, et on capte ainsi toutes les positions futures possibles. On remarque que dans cette configuration mono caméra, on peut astucieusement utiliser une caméra frontale utilisée par ailleurs dans les systèmes de régulation de distance vis-à-vis des véhicules précédents.

Selon un aspect, les étapes a- à f- sont répétées, de préférence avec une fréquence d'itération au moins égale à 5 Hz. On fournit ainsi une restitution d'images en temps réel.

Selon un aspect, la fréquence d'itération au moins égale à 25 Hz. Moyennant quoi, on fournit une restitution de type vidéo fluide classique pour la vision au travers du capot.

Selon un aspect à l'étape e- est l'item choisi est l'item le plus récent couvrant le périmètre de la portion de sol couverte courante (PSC2).

La présente invention vise aussi un système d'aide à la conduite de véhicule automobile, configuré pour fournir un affichage d'une restitution d'une scène de proximité (SP), ladite scène de proximité comprenant au moins une portion de sol couverte (PSC) par le dit véhicule automobile, notamment sa partie avant,
- la restitution étant élaborée à partir d'images antérieures captées par au moins une caméra embarquée, couvrant la scène de proximité,
- la restitution comprenant une incrustation d'une représentation des roues avant du véhicule.

Selon une réalisation, la représentation des roues avant du véhicule comprend une empreinte au sol et/ou un avatar en 3 dimensions.

Selon une réalisation, le système d'aide comprend aussi un affichage ajouté du gabarit et/ou de l'ombre portée du véhicule en projection verticale.

La présente invention vise aussi un véhicule comprenant au moins un écran, une unité de contrôle, au moins une caméra embarquée (40,41,42,43,44), et un système d'aide à la conduite configuré pour mettre en oeuvre un procédé décrit précédemment.

L'invention sera davantage détaillée par la description de modes de réalisation non limitatifs, et sur la base des figures annexées illustrant des variantes de l'invention, dans lesquelles :
- [Fig.1] illustre un schématiquement en élévation un exemple de véhicule dans lequel l'invention est mise en oeuvre, qui se déplace sur un sol;
- [Fig.2] illustre schématiquement une vue de dessus d'un véhicule conformément à l'invention ;
- [Fig.3] illustre schématiquement une situation de manoeuvre de parking vu en élévation ;
- [Fig.4] illustre schématiquement une situation de manoeuvre de parking vu en dessus ;
- [Fig.5] illustre schématiquement un exemple de rendu visuel fourni au conducteur sur un écran concernant la configuration illustrée aux figures 3 et 4 ;
- [Fig.6] illustre schématiquement la portion de sol couverte dans la scène de proximité, elle-même à intérieur du périmètre de la vue à vol d'oiseau ;
- [Fig.7] illustre schématiquement la diversité des trajectoires possibles ;
- [Fig.8] illustre schématiquement un exemple de diagramme fonctionnel de mise en oeuvre du procédé ;
- [Fig.9] illustre une vue de profil d'un véhicule avec la portion de sol couverte à l'intérieur de la scène de proximité ;
   [Fig.10] illustre une vue de dessus d'un véhicule avec la portion de sol couverte à l'intérieur de la scène de proximité ;
   [Fig.11] illustre schématiquement un exemple de trajectoire de manoeuvre de parking ;
- [Fig.12] illustre un deuxième mode de réalisation du procédé basé sur l'utilisation d'une caméra frontale de pare-brise ;
- [Fig.13] illustre un exemple d'enchainement des étapes du procédé.

Sur les différentes figures, les mêmes références désignent des éléments identiques ou similaires. Pour des raisons de clarté de l'exposé, certains éléments ne sont pas nécessairement représentés à l'échelle.

### Généralités et système

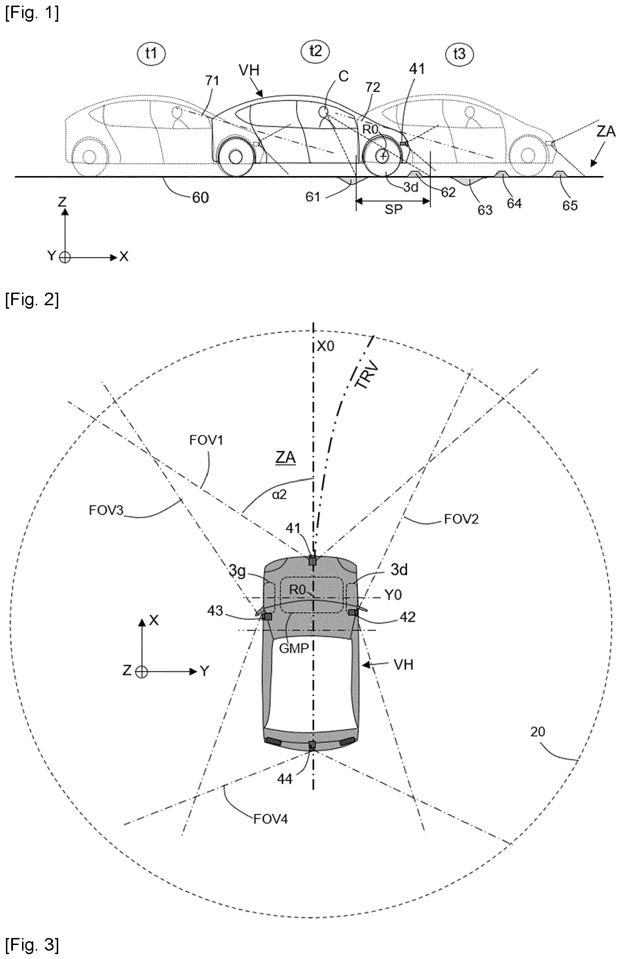

Sur la figure 1, un véhicule noté **VH** se déplace sur une chaussée **60.** Au milieu de la figure, une silhouette de véhicule en trait plein illustre la position courante du véhicule à l'instant présent **t2,** sur la gauche une silhouette de véhicule en traits pointillés illustre une position à un instant antérieur **t1,** et sur la droite une autre silhouette en traits pointillés illustre une position à un instant postérieur **t3.**

D'une façon générale, un véhicule automobile présente un repère dans l'espace comprenant un axe longitudinal **X** suivant une direction de déplacement dudit véhicule automobile, un axe latéral **Y** perpendiculaire à l'axe longitudinal **X,** et un axe vertical **Z** perpendiculaire à l'axe longitudinal **X** et à l'axe latéral **Y,** l'axe vertical étant dirigé de bas en haut.

Dans l'exemple illustré, la chaussée **60** est parsemée de petites imperfections, par exemple des trous **61, 63** et des bosses **62, 64, 65,** appelés génériquement ici « écueils ». Certains écueils peuvent être mobiles comme un animal, par exemple un chat qui passe, ou encore un ballon.

À l'instant **t1,** le conducteur **C** ne voit pas l'écueil **61** car il est situé en dessous de sa ligne de vision basse directe **71,** mais le conducteur **C** voit les écueils 62, 63, 64, 65 un peu plus lointains.

À l'instant **t2,** les écueils **61, 62** se trouvent sous la portion avant du véhicule dans une zone appelée ici portion de sol couverte que nous verrons en détails plus loin. Le conducteur **C** ne voit pas écueils 63, 64, car ils sont situés en dessous de sa ligne de vision basse directe **72,** mais le conducteur **C** voit l'écueil **65.**

À l'instant **t3,** les écueils **64, 65** se trouvent sous la portion avant du véhicule et ne sont plus visibles du conducteur **C.**

Ainsi, au fur et à mesure que le véhicule progresse en marche avant, des portions de la chaussée, qui étaient visibles à un moment donné, ne sont plus visibles à un instant postérieur par la vision directe d'un point de vue correspondant à la tête du conducteur dans la position de conduite.

Par ailleurs, le véhicule est équipé d'une ou plusieurs caméras dont la fonction est de capturer périodiquement des images pour les restituer directement ou indirectement au conducteur. Il est notamment prévu au moins une caméra frontale **41** qui peut être située dans le bouclier avant (ou selon une autre configuration dans la zone supérieure du pare-brise côté intérieur.

Toujours en référence à la figure 1, en se plaçant à l'instant **t2,** une ou plusieurs images qui ont été capturées à l'instant **t1,** dans lesquelles on peut voir les écueils **62** 63 sont utilisées pour une présentation d'informations au conducteur à l'instant t2.

De même un peu plus tard, en se plaçant à l'instant **t3,** une ou plusieurs images qui ont été capturées à l'instant **t2,** dans lesquelles on peut voir les écueils **64, 65** sont utilisées pour une présentation d'informations au conducteur à l'instant **t3.** Ce principe va être explicité plus en détail dans les sections suivantes.

Dans l'exemple illustré à la figure 2, le véhicule est équipé de 4 caméras dont une caméra frontale **41** agencée dans le bouclier avant. Le véhicule est équipé d'une caméra latérale gauche **43,** d'une caméra latérale droite **42** et d'une caméra arrière **44.**

Dans certaines configurations, il peut y avoir deux caméras complémentaires soit un total de six caméras.

Les caméras en question sont des caméras grand angle, e.g. des caméras dites 'fish eye'. Les caméras capturent des images en couleur. Il n'est pas exclu d'utiliser des caméras sensibles dans la bande des infrarouges.

La caméra frontale **41** présente un champ de vision noté **FOV1.** La caméra latérale droite **42** présente un champ de vision noté **FOV2.** La caméra latérale gauche **43** présente un champ de vision noté **FOV3.** La caméra arrière **44** présente un champ de vision noté **FOV4.** Comme connu en soi, pour produire une vision à 360°, les différents champs de vision adjacents ont leurs zones angulaires extrêmes qui se recoupent les unes les autres. On a ainsi une couverture continue de tout l'espace angulaire autour du véhicule **VH,** donc une couverture à 360° autour du véhicule.

Les zones de recouvrement sont identifiées par exemple sur la base d'une reconnaissance de contours, ou de toute autre méthode géométrique ou photométrique. L'identification des zones de recouvrement permet le raccordement de 2 images adjacentes, deux à deux. On arrive ainsi à former une méta image a 360°. La méta image 360° concaténée est alors une méta-image continue, sans doublon ni manque. Cette fonction 360° est appelée dans le métier AVM (« Around View Monitor »), et peut déjà être existante avant l'ajout de la fonction capot virtuellement transparent.

A partir de quatre images, on peut aussi former une vue de type Bird View comme au connu en soi. Le lecteur pourra se rapporter par exemple au document US11021104.

On note **TRV** la trajectoire du véhicule.

Le véhicule comprend une roue avant gauche **3g** et une roue avant droite **3d,** il s'agit de roues directrices. L'axe **Y0** passe par l'axe des roues avant. L'axe **X0** correspond à l'axe médian longitudinal du véhicule. La position de référence, repérée **R0,** est prise par exemple au croisement des axes **X0** et **Y0.**

On trouve, interposé entre les roues avant, un groupe motopropulseur noté **GMP,** que le véhicule soit équipé d'un moteur à combustion interne ou qu'il soit électrique ou hybride.

### Exemple

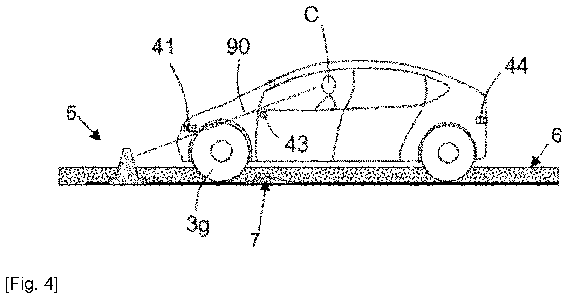

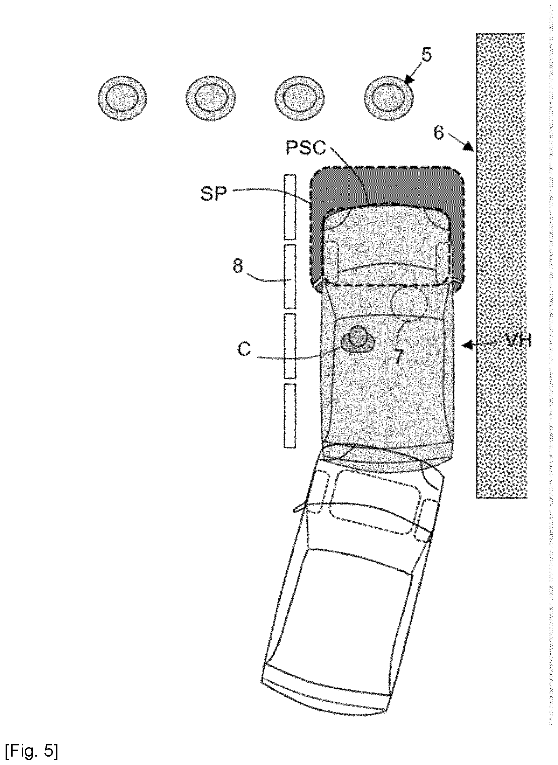

Il va être maintenant exposé le procédé proposé par la présente invention sur la base d'un exemple non limitatif illustré aux figures 3,4 5.

Le conducteur **C** du véhicule manoeuvre le véhicule pour le garer sur une place de parking. La place de parking est bordée à droite par un trottoir **6.**

Le trottoir **6** est d'une hauteur conséquente, par exemple 15 à 20 cm. Devant la place de parking, il y a des petits plots en béton repérés **5.** Il y a aussi dans une portion intermédiaire de la place de parking un dispositif de détection **7** de présence en forme de dôme. Il est aussi prévu des marquages **8** de limite de places de parking.

Dans la situation illustrée la figure 3, le conducteur **C** ne voit pas les plots **5** qui se trouvent juste devant le bouclier avant du véhicule, il ne voit pas non plus le trottoir **6** à la droite immédiate du véhicule et il ne voit pas non plus le dispositif de détection **7** qui se trouve déjà sous le véhicule. Certaines parties des marques **8** de limite de places de parking peuvent aussi être non visibles directement.

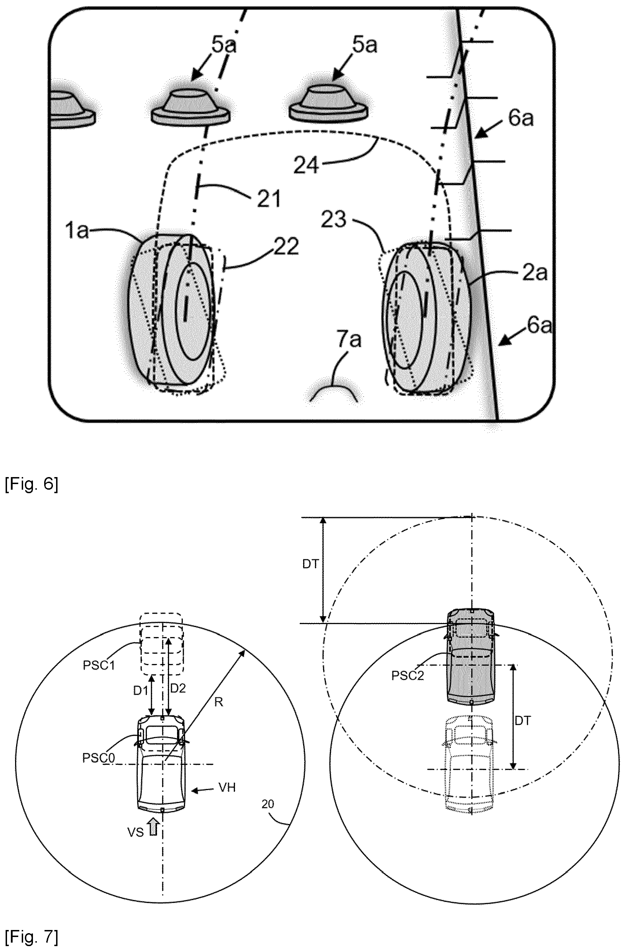

Il est représenté sur la figure 5 un exemple de rendu visuel fourni au conducteur sur un écran. Dans cet écran est restitué la vision qu'aurait le conducteur si tous les éléments qui se trouvent devant lui étaient transparents.

Cette restitution graphique comprend un élément de restitution **5a** représentant les plots **5,** un élément de restitution noté **6a** représentant le trottoir **6,** un élément de restitution noté **7a** représentant le dispositif de détection 7.

Les roues avant du véhicule sont représentées sous forme d'avatars. L'avatar **1a** représente la roue gauche **3g** et l'avatar **2a** représente la roue droite **3d.** Les avatars sont représentés comme si le conducteur voyait les roues directement par transparence au travers du capot et des autres éléments du compartiment moteur. De plus, l'avatar de roue lui-même peut être partiellement translucide, i.e. partiellement transparent, de sorte que le rendu visuel permet de voir au travers. Par exemple le conducteur **C** peut voir au travers de la roue la position du trottoir **6.**

La ligne **24** est la représentation du gabarit du véhicule. Ce gabarit ou ombre portée hors-tout (rétroviseurs exclus) est calculé à partir de la position courante de **R0** (au croisement des axes **X0** et **Y0).**

La ligne repérée **22** montre l'emprise au sol de la roue gauche, tournée vers la droite, la ligne **21** représente la trajectoire de la roue correspondante. On a représenté plusieurs emprises au sol pour illustrer l'aspect dynamique de l'affichage. Même si le véhicule n'avance pas ou ne recule pas, la position angulaire des roues est reflétée en temps réel. La ligne **23** montre une autre orientation des roues avant tournées vers la gauche. Ceci illustre la mise en valeur en temps réel de l'impact de la rotation du volant sur l'orientation des roues et la trajectoire sui en découle.

### Fonctionnalité

Comme illustré aux figures 4, 6 et 10, on définit une portion de sol couverte, repérée **PSC,** qui correspond à la portion de sol couverte par la partie avant du véhicule automobile,

On définit aussi une scène de proximité, repérée **SP,** qui est une région d'intérêt qui englobe la portion de sol couverte PSC.

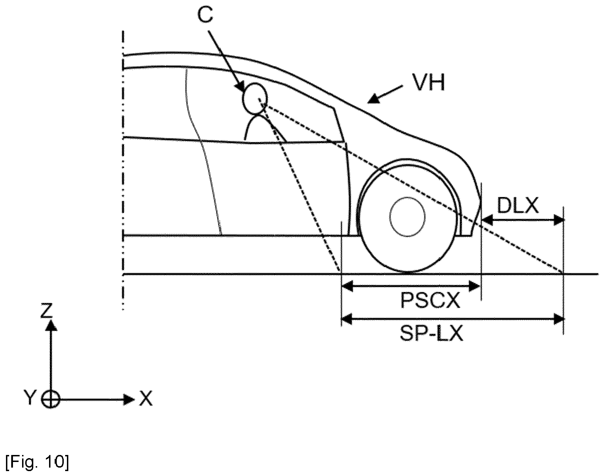

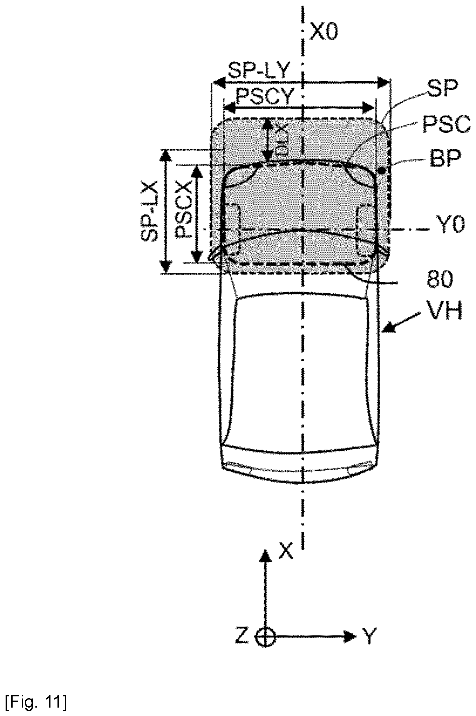

Selon la direction longitudinale X, la portion de sol couverte PSC s'étend de l'arrière des roues avant jusqu'à la limite avant du bouclier avant, sur une longueur repérée **PSCX** aux figures 9 et 10. Selon la direction transversale ou latérale **Y,** la portion de sol couverte PSC s'étend de la limite gauche de la carrosserie du véhicule jusqu'à la limite droite de la carrosserie du véhicule, sur une largeur repérée **PSCY** à la figure 10.

Exprimé autrement, la portion de sol couverte PSC correspond à la projection verticale (ombre portée verticale) de la portion avant du véhicule depuis une ligne **80** joignant l'arrière des roues avant. On note qu'on exclut les rétroviseurs avant de cette portion de sol couverte.

Pour obtenir la scène de proximité **SP** d'intérêt pour la présente invention, on complète la portion de sol couverte **PSC** par une bordure périphérique notée **BP.**

La scène de proximité **SP** s'étend vers l'avant de quelques dizaines de centimètres par rapport à la portion de sol couverte, le dépassement vers l'avant est noté **DLX.** De manière similaire, la scène de proximité **SP** s'étend vers la gauche et vers la droite par rapport à la portion de sol couverte **PSC.** La scène de proximité SP présente une longueur selon X notée **SP-LX** et une largeur, selon la direction transversale Y, notée **SP-LY.** La scène de proximité **SP** peut s'étendre vers l'arrière au-delà de la portion de sol couverte mais cela n'est pas obligatoire, dans une variante les deux limites arrière peuvent coïncider, sans dépassement.

Le dépassement vers l'avant **DLX** est un paramètre ajustable en fonction de la géométrie du véhicule et notamment de l'aspect plus ou moins plongeant du capot en relation avec la visibilité directe procurée au conducteur du véhicule dans la position du poste de conduite.

Ce paramétrage de **DLX** peut aussi prendre en compte la variabilité des mesures anthropométriques des conducteurs. On peut prendre en compte les mesures anthropométriques moyennes et le 10% percentile voire le 5% percentile.

Il n'est pas exclu non plus d'avoir des valeurs de distance de dépassements latéraux ajustables ou paramétrables pour les mêmes raisons que précédemment.

Le périmètre de la scène de proximité correspond à ce que l'on va souhaiter afficher à disposition du conducteur **C,** comme par exemple le rendu visuel illustré à la figure 5.

Le véhicule **VH** est par ailleurs équipé de moyens permettant de relever les déplacements du véhicule par exemple par odométrie.

Par exemple dans le véhicule il existe de capteurs délivrant des signaux de rotation de roues, utilisés notamment par le système de freinage. Les signaux de rotation de roues sont également utilisés ici pour la fonction odométrie. En particulier, on peut relever les signaux de rotation des roues arrière, et par intégration, en déduire le déplacement du véhicule en position et en orientation.

On peut choisir par exemple comme point de référence de la position de véhicule le point **R0** intersection des axes **X0** et **Y0.** Alternativement, il n'est pas exclu de prendre comme position de référence le centre de gravité du véhicule ou le point milieu de l'essieu arrière.

Par ailleurs, le véhicule est équipé d'un capteur de position angulaire du volant, aussi appelé en bref capteur d'angle volant.

Cette information complète le calcul d'intégration des signaux de rotation des roues arrière pour fournir une information fiable de la position du véhicule, orientation (on dit aussi `cap') incluse.

Dans un cas très simple illustré à la figure 6, le véhicule avance en ligne droite à une vitesse **VS,** l'angle volant est égal à 0 (conduite en ligne droite).

Sur la gauche est représentée la situation à un premier instant, et sur la droite est représentée la situation à un deuxième instant.

Au premier instant, la portion de sol couverte par l'avant du véhicule est notée **PSC0.** La ou les caméras captent des images au moins sur un disque **20** de rayon **R** centré sur un point central du véhicule. Ce disque **20** se déplace au fur et à mesure que le véhicule avance.

En particulier les caméras capturent une ou plusieurs images de la zone qui sera couverte par le véhicule dans le futur, notamment la ou les zone(s) notée(s) **PSC1** qui s'étend(ent) à partir du bord avant du véhicule entre une distance **D1** une distance **D2.**

En pratique on peut choisir (D2 - D1) > PSCX, voire (D2 - D1) > SP-LX. Toutefois dans le cas inverse, les images captées successivement sont agrégées par un système de raccordement d'image (par exemple on vient rajouter les pixels manquants dans l'ancien image à partir de la nouvelle image).

Les images captées sont enregistrées régulièrement. La fréquence d'itération de l'enregistrement d'images (ou méta-images) est notée **F2.**

Au deuxième instant (partie droite de la figure 6), le véhicule a avancé d'une distance **DT,** la portion de sol couverte est maintenant PSC2. L'unité de calcul à bord du véhicule va donc rechercher dans la mémoire les images captées antérieurement qui couvrent la portion de sol PSC2.

Dans la mémoire d'images ou de méta-images, on choisit celle qui coïncide le plus géométriquement et en orientation avec la portion de sol couverte **PSC2.** En outre, s'il y a plusieurs images horodatées qui conviennent on choisit l'image ou la méta-image la plus récente.

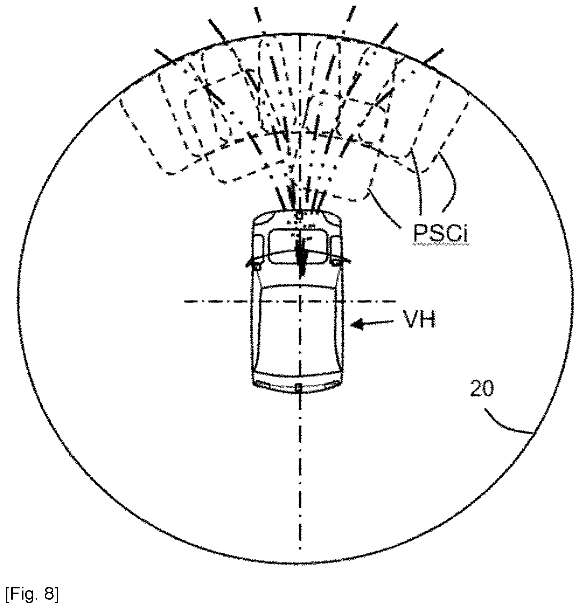

On a illustré à la figure 7, à partir d'une position à un instant donné une partie de la pluralité des futures positions possibles le véhicule, qui vont pouvoir couvrir une pluralité de portions de sol couvertes, notées PSCi.

Il est prévu que les images collectées et enregistrées couvrent toutes les possibilités possibles dans le futur immédiat.

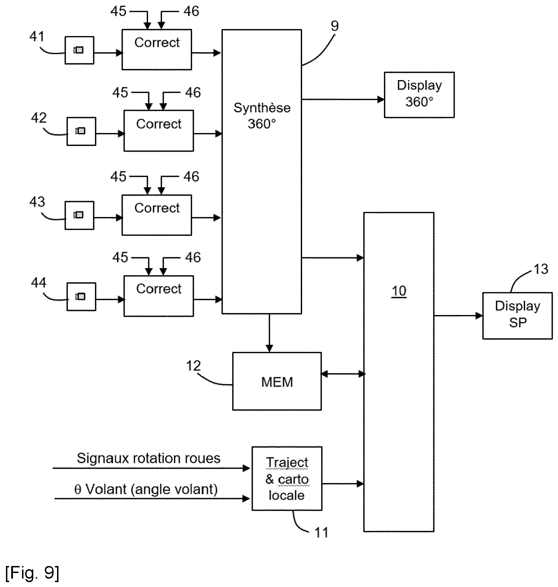

Sur la Figure 8, le diagramme fonctionnel du système illustre quatre caméras, avec leur bloc de correction respective.

La référence **45** illustrent le paramétrage de chaque caméra ; la référence **46** illustre les coordonnées du point de vue de pose, qui permettent de faire ensuite la correction rendu nécessaire par les distorsions de grand angle de la caméra, comme connu en soi.

Dans le bloc repéré **9,** on procède à la concaténation des images avec suppression du recouvrement pour obtenir une méta image de type panoramique 360°. Dans le bloc repéré **9,** on peut aussi procéder à la construction de la vue d'oiseau 'Bird View', selon des transformations connues en soi et non expliquées en détail ici. La méta image panoramique 360° peut être restitué en temps réel sur un écran du véhicule, illustré par le bloc « Display 360° », selon la fonction AVM déjà mentionnée plus haut.

Le bloc repéré **10** représente une unité de calcul et/ou les fonctions de calcul qui permettent la restitution graphique de vision au travers du capot virtuellement transparent selon la présentation.

Les images et méta-images sont stockés dans une mémoire de masse locale MEM repérée **12.**

Selon une réalisation du procédé, on utilise les images issues de la caméra frontale directement sans utiliser des portions de méta image. Selon une autre réalisation du procédé, on utilise principalement des portions de méta-images.

Le bloc repéré **11** représente la fonction de calcul de la position courante du véhicule basée sur une logique d'odométrie. Le bloc repéré **11** reçoit périodiquement en temps réel les signaux de rotation des roues, par exemple roue arrière, et reçoit par ailleurs en périodiquement temps réel l'angle du volant de conduite. Comme connu en soi, une intégration de ces signaux permet de calculer de proche en proche, au fur et à mesure, les différentes positions successives du véhicule, orientation comprise.

Le bloc repéré **13** représente la fonction de restitution graphique de la vision au travers du capot rendu virtuellement transparent.

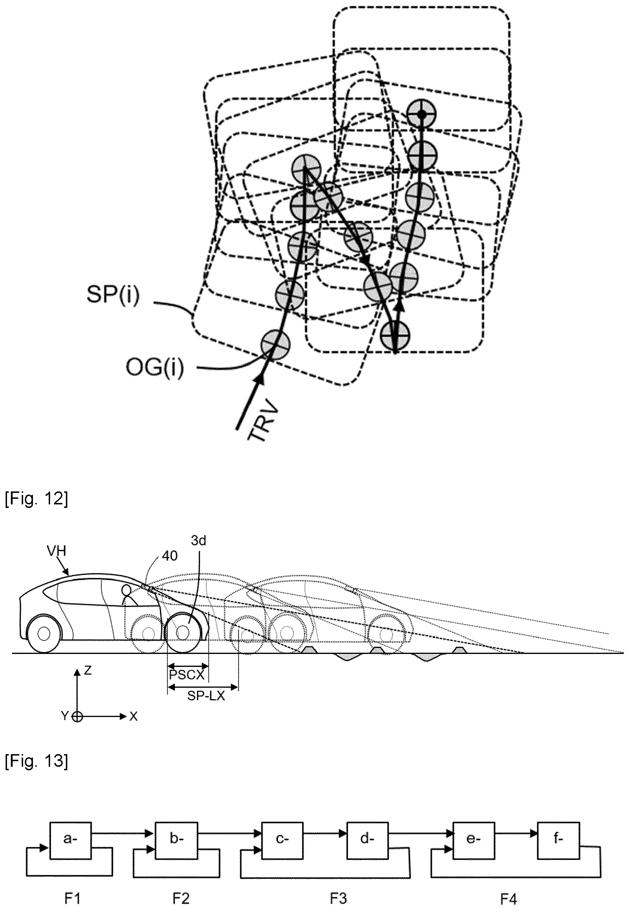

Avantageusement le procédé proposé comprend les étapes suivantes, comme apparent sur la figure 13.

Il est prévu une étape itérative d'acquisition d'images (étape a-) via au moins une caméra embarquée (40,41,42,43,44). Comme déjà évoqué plus haut il peut y avoir 4 caméras disposées sur le véhicule, mais dans une autre réalisation, il peut y avoir une seule caméra frontale.

En outre, il est prévu une étape d'enregistrement en mémoire 12 MEM des **images** (étape b-). Les images sont captées périodiquement. Les images sont captées à une pluralités d'horodates (t1, t2,... tn) et/ou de positions du véhicule.

Les images captées sont relatives au moins à une zone avant du véhicule **ZA.** La zone avant du véhicule **ZA** s'étend longitudinalement depuis le bord avant du véhicule, entre une distance frontale minimum D1 et une distance frontale maximum D2. La zone avant du véhicule **ZA** s'étend latéralement selon un cône ouvert présentant un demi angle sommet noté **α2,** α2 étant au moins égal à 60°, soit 120° d'ouverture minimum.

Comme surcouche des images brutes, on peut construire et enregistrer des méta-images (e.g. 360° ou Bird view), construites à partir des images captées à une pluralités d'horodates (t1, t2,... tn) et/ou de positions du véhicule.

Comme déjà mentionné plus haut, l'enregistrement d'image peut se faire sur la base temporelle, c'est-à-dire par exemple toutes les xx millisecondes ou sur une base de déplacements, c'est-à-dire à chaque déplacement d'au moins yy millimètres.

En parallèle (étape c-), on relève par odométrie les déplacements du véhicule. Ceci est fait dans un repère local sans nécessité de signaux externes comme les signaux de géolocalisation. Il n'est pas nécessaire non plus d'avoir recours à une cartographie.

Ensuite, pour une position courante du véhicule, on détermine la portion de sol couverte courante notée PSC2, dans un repère local (étape d-).

À partir de la définition de la portion de sol couverte à l'instant courant, on détermine dans la mémoire d'images ou de méta-images au moins un item qui couvre le périmètre de cette portion de sol couverte courante PSC2 (étape e-).

On détermine la ou les images ou méta-image source à utiliser. Comme déjà mentionné, on choisit l'image ou la portion de méta image qui coïncide le plus avec la portion de sol couverte à l'instant t.

On affiche, sur un écran, une restitution de l'image source à afficher en y superposant une représentation (1a,2a) des roues avant du véhicule.

Pour arriver à la restitution graphique, il peut être prévu de pratiquer une ou plusieurs corrections éventuelles, comme par exemple pivotement vertical ou redressement. Certaines corrections sont faites en amont dans le traitement des images capturées, d'autres sont faites au moment de la restitution graphique.

On a représenté à la figure 13 les différentes étapes exposées ci-dessus.

Le procédé est réalisé de manière itérative. Il peut y avoir une ou plusieurs fréquences de récurrence.

Par exemple l'acquisition des images peut être faite à une fréquence F1. Par exemple l'enregistrement de méta images peut être fait avec une fréquence F2. Par exemple les calculs d'odométrie et de position courante peuvent être réalisés avec une fréquence F3. Par exemple, l'affichage de la restitution graphique peut être fait avec une fréquence F4.

Les fréquences de récurrence F1, F2, F3 et F4 peuvent être toutes différentes dans une logique de fonctionnement asynchrone. Selon un autre exemple, les fréquences de récurrence sont liées entre elles avec ou sans sous échantillonnage. D'une façon générale, toutes les fréquences mentionnées sont supérieures à 5 Hz. D'une façon préférée, au moins les étapes de restitution sont réalisées à une fréquence d'au moins 25 Hz.

La figure 11 représente une trajectoire d'accostage de place de parking.

Le repère **OG(i)** dénote les positions successives des points de référence du véhicule pour les calculs d'odométrie.

Le repère **SP(i)** dénote les positions successives de la délimitation de la scène de proximité pour les positions successives du véhicule.

La figure 12 représente un deuxième mode de réalisation où on utilise essentiellement une seule caméra de capture d'images, à savoir la caméra frontale **40** située en zone supérieure du pare-brise à l'intérieur du véhicule.

Le principe de fonctionnement elle même que celui explicité ci-dessus.

Avantageusement selon la présente invention le système et le procédé sont autonomes, i.e. la fonctionnalité proposée est assurée dans les zones non couvertes par les réseaux cellulaires. De plus, la fonctionnalité proposée est assurée dans les endroits où les signaux de géolocalisation ne sont pas disponibles. On relève également qu'il n'y a pas besoin de cartographie pour la fonction proposée.

## Revendications

1. Procédé d'aide à la conduite de véhicule automobile (VH), configuré pour fournir un affichage d'une restitution d'une scène de proximité (SP), ladite scène de proximité comprenant au moins une portion de sol couverte (PSC) par le dit véhicule automobile, notamment sa partie avant, le procédé comprenant :
a- acquérir des images via au moins une caméra embarquée (40,41,42,43,44), de préférence quatre caméras embarquées,
b- enregistrer en mémoire des images, captées à une pluralités d'horodates (t1, t2,... tN) ou de positions du véhicule, relatives au moins à une zone avant du véhicule (ZA), et/ou des méta-images construites à partir des images captées à une pluralités d'horodates (t1, t2,... tN) et/ou de positions du véhicule,
c- relever par odométrie les déplacements du véhicule,
d- déterminer une position courante du véhicule, et le périmètre de la portion de sol couverte courante (PSC2),
e- déterminer dans la mémoire d'images ou de méta-images au moins un item qui couvre le périmètre de la portion de sol couverte courante (PSC2), et en déterminer la ou les images ou méta-image source à utiliser,
f- afficher, sur un écran, une restitution de l'image source à afficher en y superposant une représentation des roues avant du véhicule.

2. Procédé selon la revendication 1, dans lequel la restitution de la scène de proximité est réalisée avec un point de vue correspondant substantiellement à un point de vue d'un conducteur (C) en position de conduite du véhicule.

3. Procédé selon l'une quelconque des revendications 1 à 2, dans lequel il est prévu au moins quatre caméras, et on passe par une construction de méta-image de type 'vue à col d'oiseau'.

4. Procédé selon l'une quelconque des revendications 1 à 3, dans lequel la scène de proximité (SP) comprend la portion de sol couverte (PSC) et son pourtour sous forme d'une bande périphérique (BP).

5. Procédé selon l'une quelconque des revendications 1 à 4, dans lequel la restitution d'une scène de proximité comprend en outre un affichage ajouté de la possible trajectoire de chaque roue avant en cas de mouvement avant ou arrière du véhicule, en fonction d'une information angle volant instantanée.

6. Procédé selon l'une quelconque des revendications 1 à 5, dans lequel la restitution d'une scène de proximité comprend en outre un affichage d'un gabarit et/ou de l'ombre portée du véhicule en projection verticale.

7. Procédé selon l'une quelconque des revendications 1 à 6, dans lequel, en cas d'utilisation d'une caméra unique frontale, la zone avant du véhicule (ZA) s'étend axialement, depuis le bord avant du véhicule, entre une distance frontale minimum et une distance frontale maximum, et s'étend latéralement selon un cône ouvert présentant un demi angle sommet noté α2, α2 étant au moins égal à 60°.

8. Procédé selon l'une quelconque des revendications 1 à 7, dans lequel les étapes a- à f- sont répétées.

9. Système d'aide à la conduite de véhicule automobile, configuré pour fournir un affichage d'une restitution d'une scène de proximité (SP), ladite scène de proximité comprenant au moins une portion de sol couverte (PSC) par le dit véhicule automobile, notamment sa partie avant,
- la restitution étant élaborée à partir d'images antérieures captées par au moins une caméra embarquée, couvrant la scène de proximité,
- la restitution comprenant une incrustation d'une représentation des roues avant du véhicule.

10. Véhicule comprenant au moins un écran, une unité de contrôle, au moins une caméra embarquée (40,41,42,43,44), et un système d'aide à la conduite configuré pour mettre en oeuvre un procédé selon l'une quelconque des revendications 1 à 8.
